# FASCICULE DE BREVET EUROPEEN

(11) **EP 0 724 976 B1**
(45) Date de publication et mention de la délivrance du brevet: **30.12.1998**
(21) Numéro de dépôt: 96490008.8
(22) Date de dépôt: 29.01.1996
(51) Int. Cl.: B60G 9/02, A01M 7/00

(54) **Engin agricole équipé d'un châssis suspendu**
Landwirtschaftliche Maschine mit gefederten Fahrwerk
Agricultural machine with suspended chassis

(30) Priorité: 03.02.1995 FR 9501467
(43) Date de publication de la demande: 07.08.1996
(73) Titulaire: HARDI-EVRARD S.A., 77542 Savigny le Temple Cédex (FR)
(72) Inventeur: Blondeel, Alain, F-62170 Montreuil S/Mer (FR); Hayotte, Sébastien, F-92100 Clichy (FR); Jardry, Thierry, F-78200 Mantes la Jolie (FR)
(74) Mandataire: Hénnion, Jean-Claude

(56) Documents cités:
- FR-A- 2 605 966
- GB-A- 2 035 233
- US-A- 4 063 361

## Description

La présente invention a pour objet un engin agricole équipé d'un châssis suspendu, et trouve plus particulièrement son application dans les engins agricoles qui sont équipés de rampes, tels que par exemple les véhicules agricoles utilisés pour pulvériser un liquide.

Actuellement, dans le domaine agricole, pour réaliser la pulvérisation par exemple avec un engrais liquide, on utilise des engins autonomes qui sont équipés de rampes de pulvérisation, supportées par le châssis de l'engin. Ces engins pulvérisateurs sont de deux types. Ils peuvent être tractables au moyen d'un véhicule motorisé, ou bien il peut s'agir de véhicules agricoles auto-moteurs.

De manière usuelle, les rampes de pulvérisation sont articulées par rapport au châssis de l'engin, de telle sorte qu'à l'état replié,elles se trouvent positionnées dans l'axe d'avancement du châssis, et qu'à l'état déployé, elles se positionnent transversalement et en porte-à faux par rapport au châssis. Lorsque l'on souhaite déplacer l'engin sans mettre en oeuvre les rampes de pulvérisation, on replie avantageusement celles-ci le long du châssis, en sorte de réduire l'encombrement de l'engin agricole, ce qui facilite les déplacements notamment sur route. En revanche, lorsque l'on veut mettre en oeuvre les rampes de pulvérisation, on les déploie , ce qui permet de pulvériser en un seul passage sur une très grande largeur.

Jusqu'à présent, on a cherché à améliorer le rendement de ce type d'engin agricole en essayant d'augmenter au maximum la dimension des rampes. Aujourd'hui, la largeur de pulvérisation de ces engins pouvant atteindre une quarantaine de mètres, il en résulte que l'augmentation de la longueur des rampes entraînerait un surcoût excessif pour pallier aux contraintes mécaniques subies par le châssis ; il n'est donc plus envisageable aujourd'hui d'augmenter le rendement de ces engins agricoles en cherchant à augmenter la longueur des rampes de pulvérisation.

L'autre solution pour augmenter le rendement de ces engins agricoles est d'augmenter leur vitesse de déplacement. Cependant, cette solution pose un problème au niveau de la stabilité des rampes de pulvérisation à l'état déployé. En effet, les terrains sur lesquels sont utilisés ces engins agricoles sont par nature très accidentés, et les suspensions actuelles des essieux de ces engins ont tendance à amplifier les différences de niveau du sol prises dans une direction transversale à la direction d'avancement. Il en résulte une oscillation des rampes de pulvérisation à l'état déployé, qui est accentuée par la longueur de ces rampes, et qui est préjudiciable à la stabilité de l'engin.

Le but de la présente invention est de proposer un châssis suspendu pour engin agricole, qui soit de conception simple et qui permet d'augmenter les vitesses de déplacement de l'engin, en conservant un maximum de stabilité transversale au châssis.

Le châssis de l'invention comporte les caractéristiques du préambule de la revendication 1 qui sont par ailleurs déjà divulguées dans la demande de brevet anglais GB.2.O35.233, et parmi lesquelles on retrouve l'utilisation d'un premier essieu suspendu pouvant pivoter autour d'un premier axe qui est transversal à la direction d'avancement du cadre et qui est décalé vers le haut et vers l'avant du cadre, et à l'opposé de ce premier essieu un pivotement libre du cadre selon un axe central et parallèle à la direction d'avancement. Le but est réalisé par les caractéristiques de la deuxième partie de la revendication 1.

Lorsqu'une roue arrive au contact d'une bosse, compte tenu de la position de l'axe de rotation du palonnier, les roues s'escamotent vers l'arrière du châssis, selon un mouvement amorti. Il en résulte que les chocs dans le sens d'avancement de l'engin sont parfaitement absorbés et le cadre du châssis conserve une garde au sol constante au moins au niveau du premier essieu, qui est rigide au roulis. Enfin, conformément au principe géométrique selon lequel trois points suffisent à définir un plan, le pivotement de la partie du cadre du châssis qui est opposée au premier essieu permet avantageusement, en combinaison avec l'utilisation d'un premier essieu rigide au roulis, de conserver le cadre du châssis dans un plan parallèle au sol, et ce quel que soit le mouvement oscillant susceptible d'être pris selon l'axe d'avancement de l'engin, par le support roulant au contact au sol. Grâce au châssis de l'invention, on obtient donc une de stabilité transversale maximale au niveau du premier essieu.

Il était par ailleurs connu par la demande de brevet français FR.2.6O5.966 de réaliser un châssis suspendu pour engin agricole présentant un train de roues avant monté pivotant selon un axe médian horizontal. Cependant, il s'agit d'un pivotement contrôlé positivement au moyen de vérins et l'essieu arrière de ce châssis n'est pas un essieu rigide au roulis, mais est au contraire un essieu pouvant pivoter en nutation, et conçu pour être réglé de façon différentielle au niveau des deux roues arrière, afin d'adapter la position de l'essieu arrière à la déclivité du terrain. Rien dans cette demande de brevet français FR.2.6O5.966 , ni d'ailleurs dans la demande de brevet anglais GB.2.O35.233 ne suggérait de réaliser un châssis suspendu pour engin agricole mettant en oeuvre un premier essieu suspendu rigide au roulis conformément à la revendication 1 en combinaison avec un pivotement libre selon un axe médian longitudinal de la partie du cadre opposé au premier essieu.

On comprend à la lumière de l'explication ci-dessus que s'agissant d'un engin agricole de pulvérisation, les rampes de pulvérisation seront fixées sur le châssis au niveau du premier essieu rigide au roulis, qui peut être soit à l'avant soit à l'arrière dans le sens d'avancement de l'engin.

Selon une première variante de réalisation, le châssis est prévu pour un engin agricole tractable. Dans ce cas, il comprend un unique essieu arrière, et le cadre du châssis est équipé, à l'opposé de cet essieu arrière, d'une attache centrale montée pivotante selon la direction d'avancement du châssis.

Selon une deuxième variante de réalisation, le châssis de l'invention est prévu pour un engin agricole auto-moteur. Dans ce cas, le support roulant est un deuxième essieu qui relie deux roues entre elles, et qui est monté libre en rotation sur un deuxième palonnier, autour d'un axe central et parallèle à la direction d'avancement du cadre ; le deuxième palonnier est monté libre en rotation sur le cadre, autour d'un axe qui est transversal à la direction d'avancement du cadre, et qui est décalé vers le haut et vers l'avant des roues du deuxième essieu ; et des deuxièmes moyens de suspension sont interposés entre le cadre et le deuxième palonnier.

De la même manière que pour le premier essieu, la rotation du deuxième palonnier permet d'absorber les chocs dans la direction d'avancement de l'engin. Le cadre du châssis conserve donc, sur toute sa longueur, une garde au sol constante. La libre rotation du deuxième essieu permet d'obtenir une bonne adaptation du châssis au terrain, sans modification de l'horizontalité du cadre du châssis et sans contrainte excessive au niveau du châssis.

L'application de cette nouvelle structure des deuxième essieu et palonnier n'est pas limitée au seul châssis suspendu pour engin agricole conforme à l'invention, tout châssis pouvant avantageusement en être équipé.

D'autres caractéristiques et avantages de l'invention apparaîtront plus clairement à la lecture de la description qui va à présent être donnée d'un exemple préféré de réalisation d'un châssis suspendu pour engin agricole auto-moteur, laquelle description est donnée à titre d'exemple non limitatif et en référence aux dessins annexés sur lesquels :
- La figure 1 est une représentation en perspective d'un châssis équipé de deux trains de roulement,
- La figure 2 est une vue schématique de côté du train de roulement avant du châssis de la figure , et
- La figure 3 est une vue schématique de face du châssis de la figure 1.

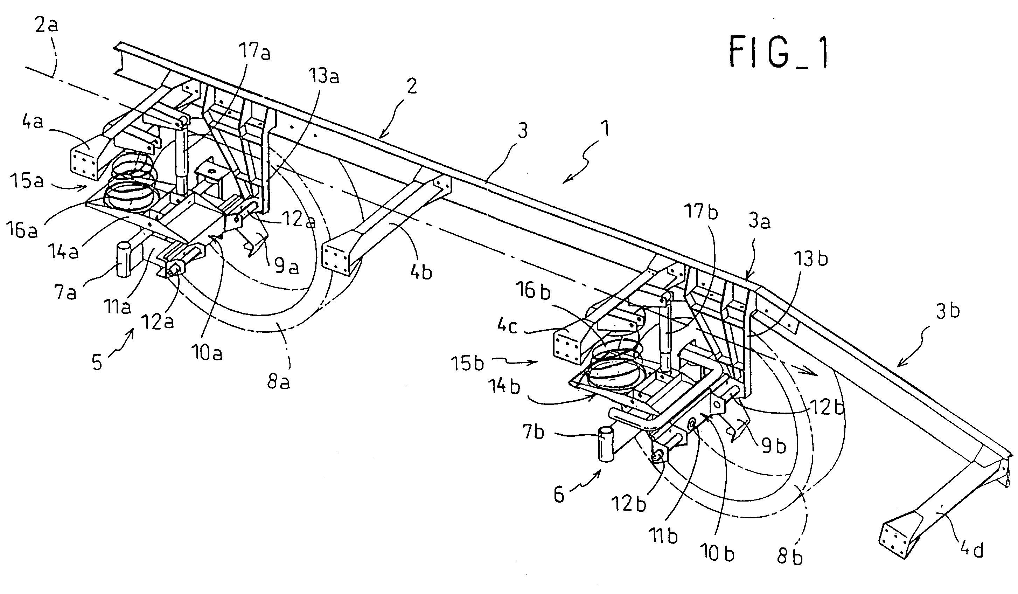

On a représenté à la figure 1 un châssis suspendu 1 conforme à l'invention et plus particulièrement adapté pour un véhicule pulvérisateur auto-tracté. Ce châssis 1 comporte un cadre 2, d'axe central 2a, supporté à ses deux parties extrêmes par deux trains de roulement arrière et avant référencés respectivement 5 et 6.

Dans l'exemple illustré, le cadre 2 comporte deux profilés longitudinaux 3 parallèles, rendus solidaires au moyen de trois traverses 4a, 4b, 4c. Sur la figure 1, par souci de clarté, un seul des deux profilés 3 a été représenté. L'extrémité avant 3a de chaque profilé 3 se prolonge en outre par un profilé court 3b légèrement incliné vers le bas. Chaque profilé court 3b sera par exemple soudé sur l'extrémité avant 3a d'un profilé 3. Les deux profilés courts 3b sont en outre maintenus écartés en position parallèle au moyen d'une traverse 4d.

Les organes principaux (non représentés) du véhicule pulvérisateur se répartissent de la manière suivante par rapport au cadre 2 du châssis 1. Le moteur est positionné en partie avant sur les profilés courts 3b. La cabine de pilotage est positionnée au niveau des deux traverses 4b et 4c. La citerne contenant le liquide à pulvériser est placée en partie arrière, sur les traverses 4a et 4b. Les rampes de pulvérisation sont fixées au niveau du train de roulement arrière 5.

Le train de roulement arrière 5 comporte un essieu 7a qui relie entre elles deux roues 8a, supportées en rotation par des porte-roues 9a ; une seule de ces deux roues 8a est représentée sur la figure 1. Cet essieu arrière 7a est fixé rigidement à un palonnier 10a, monté pivotant par rapport au cadre 2 du châssis 1. Enfin, des moyens de suspension 15a sont interposés entre le palonnier arrière 10a et le cadre 2.

Plus particulièrement, le palonnier 10a est pivotant autour de deux axes 12a, solidaires respectivement de deux triangles 13a eux-mêmes fixés en vis-à-vis l'un de l'autre sur chaque profilé 3 du cadre 2. Les deux axes 12a sont situés dans le prolongement l'un de l'autre, dans une direction transversale à l'axe 2a du cadre 2.

Dans l'exemple particulier de la figure 1, l'essieu 7a est fixé rigidement au palonnier 10a par l'intermédiaire de deux bras 11a faisant office de bras de levier par rapport aux deux axes de rotation 12a. Le palonnier 10a comporte un plateau central 14a qui sert de support aux moyens de suspension 15a et dont la face inférieure repose et est soudée sur l'essieu 7a. Ce plateau central 14a fait office de bras de levier par rapport aux deux axes de rotation 12a du palonnier 10a. Les moyens de suspension 15a consistent, d'une part en un ressort de compression cylindrique à fil rond et à pas constant 16a, qui est positionné en arrière de l'essieu 7a, et d'autre part en deux amortisseurs 17a placés de part et d'autre du ressort 16a, sensiblement au niveau de l'essieu 7a.

Le train de roulement avant 6 se différencie du train de roulement arrière 5 qui vient d'être décrit principalement en ce que son essieu avant 7b n'est pas un essieu rigide au roulis, contrairement à l'essieu arrière 7a, mais est monté libre en rotation sur le palonnier avant 10b , autour d'un axe 11b parallèle à l'axe 2a du cadre 2 et centré par rapport au cadre 2.

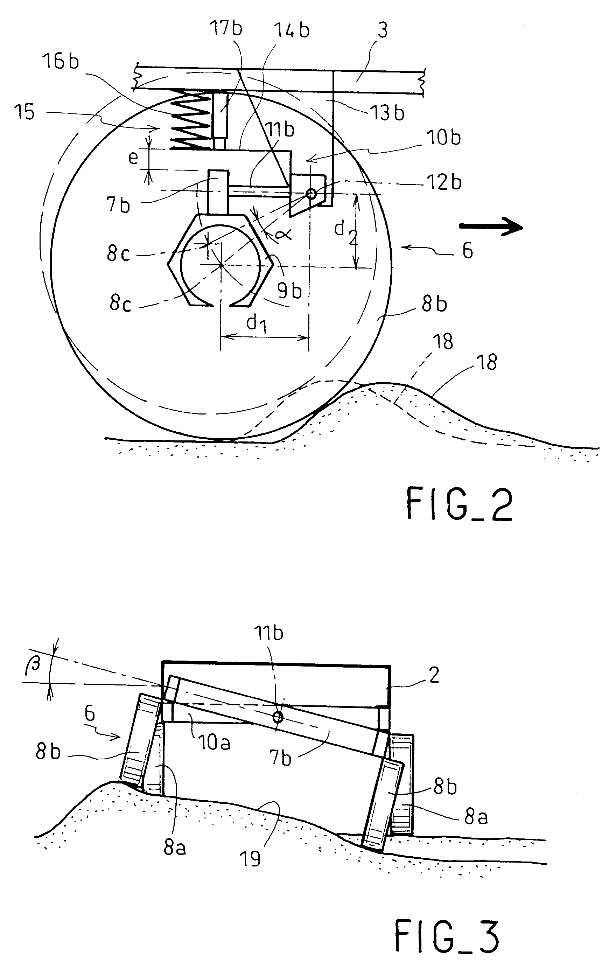

On a représenté à la figure 2, le mouvement de recul des deux roues 8b du train avant 6, lorsque celles-ci arrivent simultanément au contact d'une butte 18 du sol. Cette figure 2 fait clairement apparaître que les axes de rotation 12b du palonnier avant 10b sont décalés vers l'avant d'une distance d₁ et vers le haut d'une distance d₂, par rapport aux axes de rotation 8c des roues avant 8b. Ainsi lorsque les deux roues avant 8b arrivent au contact de la butte 18, elles font pivoter le palonnier avant 10b vers le haut d'un angle α, autour des axes 12b, par l'intermédiaire de l'axe 11b faisant office de bras de levier. Ce mouvement d'oscillation vers le haut du palonnier avant 10b est amorti par les moyens de suspension 15b. Par ailleurs, compte-tenu des positions relatives des axes de rotation 12b et des axes 8c des roues avant 8b, ce pivotement du palonnier avant 10b se traduit par un escamotage vers l'arrière des roues avant 8b. Les chocs subis dans la direction d'avancement du châssis sont donc parfaitement absorbés par le train de roulement avant 6. S'agissant du train arrière 5, on retrouve la même position relative des axes 12a par rapport aux axes de rotation des roues arrière 8a, que pour le train avant 6 ; le train arrière 5 absorbe donc de la même façon les chocs dans le sens d'avancement du châssis 1.

Si l'on se réfère à présent à la figure 3, lorsque le train de roulement avant 6 arrive au niveau d'une déclivité du sol 19, qui est transversale à la direction de progression du châssis, l'ensemble essieu 7b et roues avant 8b , s'adapte parfaitement à cette déclivité , par rotation de l'essieu avant 7b autour de l'axe 11b, d'un angle β par rapport à l'horizontale. Lorsque le train arrière 5 arrive au niveau de cette déclivité 19, l'essieu arrière et par là-même le cadre du châssis suivent cette déclivité. L'essieu arrière 7a présentant une résistance importante au roulis, on évite tout mouvement d'oscillation du cadre du châssis, ce qui ne serait pas le cas si l'essieu arrière avait été monté pivotant et équipé de moyens de suspension supplémentaires.Le cadre 2 du châssis reste donc constamment dans un plan parallèle au sol, l'absorption des chocs dans le sens d'avancement de l'engin par les palonniers 10a 10b et les moyens de suspension 15a, 15b permettant par ailleurs au châssis de conserver une garde au sol constante, sans amplification des différences de niveau du sol prises dans une direction transversale à la direction d'avancement de l'engin.

Il convient de remarquer que le débattement de l'essieu avant 7b autour de l'axe 11b est limité en amplitude par le plateau 14b du palonnier avant 10b. La valeur maximale de l'angle β dépendra donc de l'écart e entre le plateau 14b et l'essieu avant 7b (figure 2), ainsi que de la largeur du plateau 14b. Il est envisageable de placer des butées de protection en caoutchouc, entre l'essieu avant 7b et le plateau 14b du palonnier 10b, de part et d'autre de l'axe 11b. La fonction des ces butées devra dans ce cas être uniquement de protéger le palonnier 10b et l'essieu avant 7b contre l'usure mécanique due aux chocs.

Dans un exemple précis de réalisation , l'écart entre les deux roues de chaque train de roulement était de 1,80m ; les distances d₁ et d₂ étaient identiques pour les deux trains avant et arrière et valaient respectivement 300 et 400mm; la valeur maximale des angles α et β était de l'ordre de 20°; les roues avant et arrière possédaient un débattement maximum dans un plan vertical de 0,5m.

L'invention n'est pas limitée au mode particulier de réalisation qui vient d'être décrit. Les trains de roulement 5 et 6 pourraient être inversés; dans ce cas, les rampes de pulvérisation seraient fixées à l'avant, et non plus à l'arrière du châssis. Dans une autre variante de réalisation pour engin agricole destiné à être tracté au moyen d'un véhicule motorisé, le châssis pourra ne comporter qu'un unique train de roulement arrière 5. La liaison entre le châssis et le véhicule tracteur sera dans ce cas réalisée au moyen d'une attache centrée sur la partie avant du cadre du châssis, et pouvant pivoter selon un axe parallèle à l'axe d'avancement du châssis. Dans cette autre variante, le châssis aura de préférence une forme de triangle isocèle, dont la base sera supportée par le train de roulement arrière. il est également envisageable dans le cadre de l'invention d'utiliser tout autre moyen de suspension connu de l'homme du métier. On pourra notamment remplacer le ressort mécanique 16a par un ressort ou soufflet pneumatique, ou encore par des vérins de suspension oléo-pneumatiques.

## Revendications

1. Engin de pulvérisation agricole équipé de rampes de pulvérisation en porte-à-faux et comportant un châssis suspendu (1), ledit châssis comportant un cadre (2) qui est supporté au niveau des ses deux parties extrêmes respectivement par un premier essieu (7a) reliant deux roues (8a) entre elles, et par un support roulant, le premier essieu (7a) pouvant pivoter autour d'un premier axe (12a) qui est transversal à la direction d'avancement du cadre et qui est décalé vers le haut et vers l'avant du cadre par rapport à l'axe des roues (8a), des premiers moyens de suspension (15a) étant prévus pour amortir par rapport au cadre (2) le pivotement du premier essieu (7a), caractérisé en ce que la partie du cadre (2) opposée au premier essieu (7a) est conçue pour pouvoir pivoter librement par rapport à son support, autour d'un axe central et parallèle à la direction d'avancement du cadre, et en ce que le premier essieu (7a) est fixé rigidement à un premier palonnier (1Oa) dont les deux extrémités sont montées pivotantes par rapport au cadre (2) selon le premier axe (12a), en sorte de constituer un essieu rigide au roulis.

2. Engin agricole tractable selon la revendication 1, caractérisé en ce qu'il comprend un unique premier essieu arrière, et en ce que le cadre du châssis est équipé, à l'opposé de cet essieu arrière, d'une attache centrale montée pivotante selon la direction d'avancement du châssis.

3. Engin agricole auto-moteur selon la revendication 1, caractérisé en ce que le support roulant est constitué par un deuxième essieu (7b) qui relie deux roues (8b) entre elles et qui est monté libre en rotation sur un deuxième palonnier (1Ob), autour d'un axe (11b) central et parallèle à la direction d'avancement du cadre (2), en ce que le deuxième palonnier (1Ob) est monté libre en rotation sur le cadre (2), autour d'un axe (12b) qui est transversal à la direction d'avancement du cadre (2), et qui est décalé vers le haut et vers l'avant du cadre (2) par rapport à l'axe (8c) des roues (8b) du deuxième essieu (7b), et en ce que des deuxièmes moyens de suspension (15b) sont interposés entre le cadre (2) et le deuxième palonnier (1Ob).

4. Engin agricole selon l'une des revendications 1 à 3 caractérisé en ce que le premier (1Oa) et s'il y a lieu deuxième (1Ob) palonniers comportent respectivement un plateau central (14a, 14b) qui supporte les moyens de suspension (15a, 15b) , et fait office de bras de levier par rapport à l'axe transversal de pivotement (12a, 12b) du palonnier (1Oa, 1Ob).

5. Engin agricole selon les revendication 3 et 4 caractérisé en ce que le plateau central (14b) du deuxième palonnier (10b) est positionné au-dessus du deuxième essieu (7b) et en limite le débattement axial.

6. Engin agricole selon l'une des revendications 1 à 5 caractérisé en ce que les premiers (15a) et s'il y lieu deuxièmes (15b) moyens de suspension sont chacun constitués par un unique ressort (16a, 16b) ou soufflet pneumatique ou vérin oléo-pneumatique positionné sur l'axe central d'avancement (2a) du cadre (2), et monté en parallèle avec un ou plusieurs amortisseurs (17a, 17b).

## Claims

1. Agricultural sprayer equipped with overhanging spray booms and comprising a suspended chassis (1), the said chassis comprising a frame (2) which is supported at one end part by a first axle (7a) connecting two wheels (8a) together and at its other end part by a rolling support, it being possible for the first axle (7a) to pivot about a first pivot axis (12a) which is transverse to the direction of forward travel of the frame and is offset upwards and towards the front of the frame with respect to the axis of the wheels (8a), first suspension means (15a) being provided in order to damp with respect to the frame (2) the pivoting of the first axle (7a), characterized in that the part of the frame (2) that lies opposite the first axle (7a) is designed to be able to pivot freely with respect to its support about a central axis parallel to the direction of forward travel of the frame, and in that the first axle (7a) is fixed rigidly to a first balance beam (10a), the two ends of which are mounted so that they can pivot with respect to the frame (2) about the first axis (12a) so as to form an axle which is rigid in roll.

2. Trailed agricultural machine according to Claim 1, characterized in that it comprises a single first rear axle and in that the frame of the chassis is equipped, at the opposite end from this rear axle, with a central attachment mounted so that it can pivot in the direction of forward travel of the chassis.

3. Self-propelled agricultural machine according to Claim 1, characterized in that the rolling support consists of a second axle (7b) which joins two wheels (8b) together and which is mounted to rotate freely on a second balance beam (10b) about a central pivot axis (11b) parallel to the direction of forward travel of the frame (2), in that the second balance beam (10b) is mounted to rotate freely on the frame (2) about a pivot axis (12b) which is transverse to the direction of forward travel of the frame (2) and which is offset upwards and towards the front of the frame (2) with respect to the axis (8c) of the wheels (8b) of the second axle (7b), and in that second suspension means (15b) are inserted between the frame (2) and the second balance beam (10b).

4. Agricultural machine according to one of Claims 1 to 3, characterized in that the first (10a) and if appropriate the second (10b) balance beam respectively comprise a central plate (14a, 14b) which supports the suspension means (15a, 15b) and acts as a lever arm with respect to the transverse axis of pivoting (12a, 12b) of the balance beam (10a, 10b).

5. Agricultural machine according to Claims 3 and 4, characterized in that the central plate (14b) of the second balance beam (10b) is positioned above the second axle (7b) and limits its axial travel.

6. Agricultural machine according to one of Claims 1 to 5, characterized in that the first (15a) and if appropriate the second (15b) suspension means each consist of a single spring (16a, 16b) or pneumatic bellows or oleo-pneumatic ram positioned on the central axis (2a) of forward travel of the frame (2) and mounted in parallel with one or more dampers (17a, 17b).

## Patentansprüche

1. Landwirtschafliche Sprühmaschine, die mit überstehenden Sprührohren versehen ist und einen aufgehängten Rahmen (1) aufweist, wobei der genannte Rahmen ein Rahmengestell (2) aufweist, das auf Höhe seiner beiden Endabschnitte jeweils von einer ersten Achse (7a), die zwei Räder (8a) miteinander verbindet, und von einer eine Rollbewegung durchführenden Abstützung getragen ist, wobei die erste Achse (7a) um eine erste geometrische Achse (12a) schwenken kann, die quer zur Richtung der Vorwärtsbewegung des Rahmengestells verläuft und in Bezug auf die Achse der Räder (8a) zur Ober- und Vorderseite des Rahmens versetzt ist, und wobei erste Aufhängungsmittel (15a) vorgesehen sind, um in Bezug auf das Rahmengestell (2) die Schwenkbewegung der ersten Achse (7a) zu dämpfen, dadurch gekennzeichnet, daß der Abschnitt des Rahmengestells (2), der der ersten Achse (7a) gegenüberliegt, dazu ausgebildet ist, um in Bezug auf seinen Träger um eine Achse frei zu schwenken, die mittig und parallel zur Richtung der Vorwärtsbewegung des Rahmens angeordnet ist, und daß die erste Achse (7a) starr an einem ersten Träger (10a) befestigt ist, dessen beide Enden in Bezug auf das Rahmengestell (2) um die erste geometrische Achse (12a) derart schwenkbar angebracht sind, daß eine in Rollrichtung steife Achse gebildet ist.

2. Schleppbare Landmaschine nach Anspruch 1, dadurch gekennzeichnet, daß sie eine einzige, erste Hinterachse aufweist, und daß das Rahmengestell des Rahmens dieser Hinterachse gegenüberliegend mit einer mittigen Kupplung ausgestattet ist, die entsprechend der Richtung der Vorwärtsbewegung des Rahmens schwenkbar angebracht ist.

3. Selbstfahrende Landmaschine nach Anspruch 1, dadurch gekennzeichnet, daß der Schwenkträger von einer zweiten Achse (7b) gebildet ist, die zwei Räder (8b) miteinander verbindet und die auf einem zweiten Träger (10b) rund um eine geometrische Achse (11b) frei schwenkbar angebracht ist, die mittig und parallel zur Richtung der Vorwärtsbewegung des Rahmengestells (2) verläuft, daß der zweite Träger (10b) auf dem Rahmengestell (2) um eine geometrische Achse (12b) frei schwenkbar angebracht ist, die zur Richtung der Vorwärtsbewegung des Rahmengestells (2) quer verläuft, und die zur Ober- und Vorderseite des Rahmengestells (2), auf die geometrische Achse (8c) der Räder (8b) der zweiten Achse (7b) bezogen, versetzt ist, und daß zweite Aufhängungsmittel (15b) zwischen dem Rahmengestell (2) und dem zweiten Träger (10b) angeordnet sind.

4. Landmaschine nach einem der Ansprüche 1 bis 3, dadurch gekennzeichnet, daß der erste Träger (10a) und, falls vorhanden, der zweite Träger (10b) jeweils eine mittige Platte (14a, 14b) aufweist, die die Aufhängungsmittel (15a, 15b) trägt und als Hebelarm in Bezug auf die geometrische Schwenk-Querachse (12a, 12b) des Trägers (10a, 10b) dient.

5. Landmaschine nach den Ansprüchen 3 und 4, dadurch gekennzeichnet, daß die mittige Platte (14b) des zweiten Trägers (10b) oberhalb der zweiten Achse (7b) angeordnet ist und deren axiale Auslenkbewegung begrenzt.

6. Landmaschnine nach einem de Ansprüche 1 bis 5, dadurch gekennzeichnet, daß die ersten (15a) und, falls vorhanden, die zweiten Aufhängungsmnittel (15b) jeweils von einer einzigen Feder (16a, 16b) oder einem pneumatischen Balgen oder einem Öl-Luft-Zylinder gebildet sind, die bzw. der auf der mittigen geometrischen Achse (2a) der Vorwärtsbewegung des Rahmengestells (2) angeordnet ist bzw. sind, und daß sie parallel zu einem oder zu mehreren Dämpfern (17a, 17b) angebracht sind.
